# EUROPEAN PATENT SPECIFICATION

(11) **EP 2 905 149 B1**
(45) Date of publication and mention of the grant of the patent: **19.06.2019**
(21) Application number: 15153184.5
(22) Date of filing: 30.01.2015
(51) Int. Cl.: B60C 11/11, B60C 11/03

(54) **Pneumatic tire**
Luftreifen
Pneu

(30) Priority: 07.02.2014 JP 2014022578
(43) Date of publication of application: 12.08.2015
(73) Proprietor: SUMITOMO RUBBER INDUSTRIES LIMITED, Kobe-shi, Hyogo-ken (JP)
(72) Inventor: Fujita, Masayuki, Kobe-shi, Hyogo 651-0072 (JP)
(74) Representative: Manitz Finsterwald Patent- und Rechtsanwaltspartnerschaft mbB

(56) References cited:
- EP-A1- 2 821 257
- JP-A- H0 450 006
- JP-A- 2006 082 734
- US-A1- 2011 088 821

## Description

### Technical Field

The present invention relates to a pneumatic tire, more particularly to a tread pattern capable of improving the wear resistance of the tread portion without sacrificing the wet grip performance of the tire. The features of the preamble of the independent claim are known from JP H04 50006 A. Related technologies are known from JP 2006 082734 A and US 2011/088821 A1.

### Background Art

In a pneumatic tire for running on wet road surfaces, the tread portion of which is provided with a block pattern made up of a plurality of blocks divided by a plurality of grooves, it has been known to increase the depths and widths of the grooves in order to improve the wet grip performance of the tire.

Such tire however has a problem such that the wear resistance of the tread portion is decreased due to the increased groove volume which reduces the rigidity of the blocks.

### [Prior art document]

### [Patent literature]

[Patent literature 1] Japanese Patent Application Publication No.2012-116245

### Summary of Invention

### Technical Problem

The present invention was made with the view to the above-mentioned problem, and a primary object of the present invention is to provide a pneumatic tire in which, by improving shapes or configurations of crown blocks and shoulder blocks, the wear resistance is improved without sacrificing the wet grip performance.

### solution to Problem

According to the present invention as defined in the independent claim, a pneumatic tire comprises a tread portion provided with a unidirectional tread pattern having an intended tire rotational direction, and the tread portion is provided with:
a plurality of axial grooves each extending between tread edges and curved convexly toward the intended tire rotational direction;
a pair of connecting grooves disposed one on each side of the tire equator, and disposed between every two of the circumferentially adjacent axial grooves so as to connect therebetween;
a circumferential groove disposed along the tire equator, and disposed between every two of the circumferentially adjacent axial grooves so as to connect therebetween;
a pair of crown blocks formed between every two of the circumferentially adjacent axial grooves, and divided by the two connecting grooves and one circumferential groove, wherein each crown block has a substantially trapezoidal configuration, and an axial width gradually decreasing toward the intended tire rotational direction; and
a pair of shoulder blocks formed between every two of the circumferentially adjacent axial grooves, and disposed axially outside the respective crown blocks,
   wherein
on each side of the tire equator, the axially outer ends of the crown blocks are positioned axial outside the axially inner ends of the shoulder blocks.

Further, the pneumatic tire according to the present invention has the following features (1) and (4), and may have the following features (2), (3), and (5)-(7):
(1) each of the axial grooves comprises a first groove segment extending across the tire equator and a pair of second groove segments on both sides thereof in the tire axial direction, and
   each of the second groove segments defines an axially outer oblique edge of one of the crown blocks;
(2) a heel-side end of each shoulder block is positioned on the heel-side of a toe-side end of the shoulder block adjacent to said shoulder block on the heel-side thereof;
(3) the connecting grooves have a groove width of 1 to 10 mm;
(4) each of the shoulder blocks is provided with a shoulder axial groove having an inner end connected to one of the second groove segments and an outer end opened at the adjacent tread edge,
   the shoulder axial groove comprises an inside segment having said inner end and an outside segment having a groove width more than that of the inside segment, and
   the outside segment has an inclination angle of not more than 45 degrees with respect to the tire axial direction;
(5) the inside segment has an inclination angle of not more than 45 degrees with respect to the tire axial direction;
(6) in a tread edge zone defined as extending axially inwardly from each of the tread edges by an axial distance of 10 % of a tread width,
   the shoulder block has a heel-side edge and a toe-side edge, and a difference between the angle of the first block edge with respect to the tire axial direction and the angle of the second block edge with respect to the tire axial direction is at most 5 degrees;
(7) the first block edge has an angle of not more than 45 degrees with respect to the tire axial direction.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia),STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

However, in case of passenger car tires, the standard pressure and standard tire load are uniformly defined by 180 kPa and 88 % of the maximum tire load, respectively.

In case of racing kart tires, the standard pressure and standard tire load are uniformly defined by 100 kPa and 392 N, respectively.

The tread edges Te are the axial outermost edges of the ground contacting patch which occurs under the normally inflated loaded condition when the camber angle of the tire is zero.

The tread width TW is the width measured under the normally inflated unloaded condition, as the axial distance between the tread edges Te determined as above.

### Brief Description of Drawings

Figs. 1A, 1B and 1C are a developed partial view of the tread portion of a pneumatic tire as an embodiment of the present invention, to which reference signs are given in differently manners.

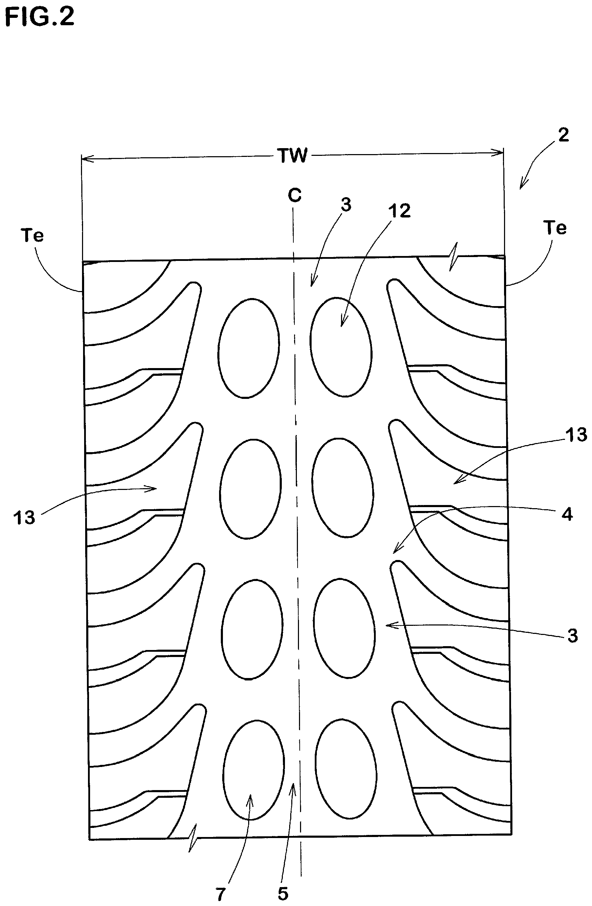

Fig. 2 is a developed partial view of the tread portion of a pneumatic tire used as a comparative example in the undermentioned comparative tests.

### Description of Embodiments

Embodiments of the present invention will now be described in detail in conjunction with the accompanying drawings.

In the following embodiments, the present invention is embodied as a pneumatic tire 1 for a four-wheeled racing kart. incidentally, the diameter of a racing kart tire is usually 10 or 11 inches.

As usual, the pneumatic tire 1 comprises a tread portion 2, a pair of axially spaced bead portions each with a bead core therein, a pair of sidewall portions extending between the tread edges Te and the bead portions, a carcass extending between the bead portions through the tread portion 2 and the sidewall portions, a tread reinforcing belt disposed radially outside the carcass in the tread portion.

The pneumatic tire 1 is provided in the tread portion 2 with a unidirectional tread pattern having a designed intended tire rotational direction N.
incidentally, the intended tire rotational direction N is indicated in the sidewall portions of the tire by the use of for example an arrowed line, characters or the like.

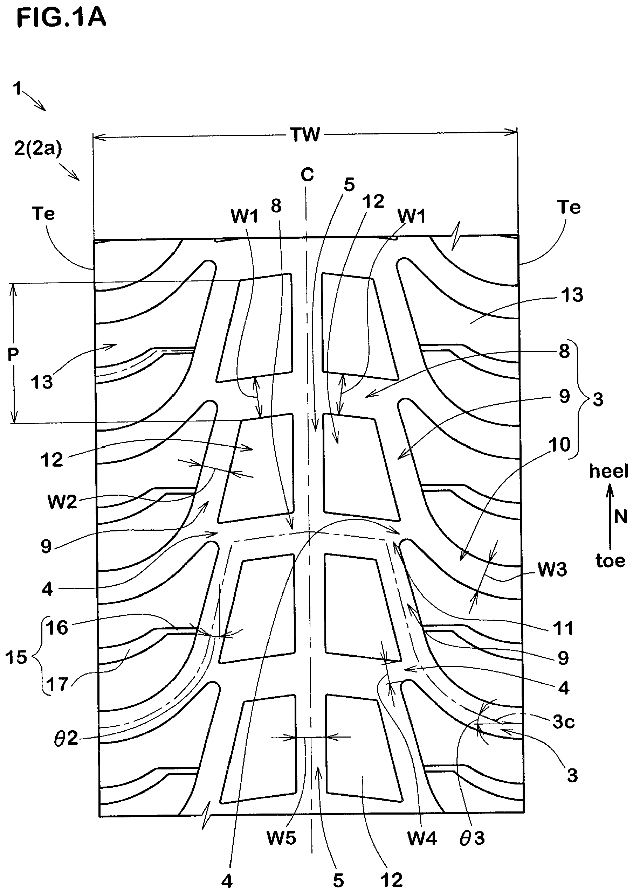

As shown in Fig. 1A, the tread portion 2 is provided with a plurality of axial grooves 3 each extending from one of tread edges Te to the other across the tire equator C, a pair of connecting grooves 4 disposed one on each side of the tire equator C, and disposed between every two of the axial grooves 3 which are adjacent to each other in the tire circumferential direction so as to connect therebetween, and a circumferential groove 5 disposed between every two of the axial grooves 3, and extending along the tire equator C.

The axial grooves 3 are each curved convexly toward the intended tire rotational direction N in order that water existing between the tread surface 2a of the tread portion 2 and the road surface is led toward the tread edges Te by utilizing rotation of the tire 1 and thereby effectively discharged axially outwardly to improve the wet performance of the tire.

The axial grooves 3 each comprise
a first groove segment 8 intersecting the tire equator C, a pair of second groove segments 9 disposed on both sides of the first groove segment 8 in the tire axial direction, and a pair of third groove segments 10 disposed axially outside the respective first groove segments 8.

The first groove segment 8 is inclined toward the opposite direction to the intended tire rotational direction N while extending from the tire equator C towards each axial end of the first groove segment 8 in order that water existing in the vicinity of the tire equator C is effectively led toward the second groove segments 9 by utilizing the rotation of the tire 1. In view of the drainage and the tread pattern rigidity, the width W1 of the first groove segment 8 is preferable set in a range of from 5 % to 30 % of the tread width TW. In this example, the groove width W1 is constant along the length of the first groove segment 8 in order to improve the resistance to water flow in the first groove segment 8.

Each of the second groove segments 9 extends axially outwardly from the first groove segment 8, while inclining toward the opposite direction to the intended tire rotational direction N at an inclination angle θ2 smaller than the inclination angle of the first groove segment 8 with respect to the tire circumferential direction in order that water existing in the axial groove 3 is effectively led toward the tread edges Te by utilizing the rotation of the tire 1.
Thus, a bent position 11 is formed at the junction between the second groove segment 9 and the first groove segment 8.

If the inclination angle θ2 of the second groove segments 9 is excessively small, as the length of the second groove segment 9 increases and the volume of land portion of the tread portion 2 decreases, there is a possibility that the wear resistance of the tread portion is decreased.
Therefore, the inclination angle θ2 of the second groove segment 9 is preferably set in a range of from 10 to 30 degrees.

Each of the second groove segments 9 extends straight in order that the resistance to water flow is decreased while maintaining the rigidity of the land portion on each side of each of the second groove segments 9, and thereby the wear resistance and the wet grip performance can be improved in a well balanced manner.

In order to effectively derive the above function, the groove width W2 of the second groove segment 9 is preferably set in a range of from 3 % to 25 % of the tread width TW.

Each of the third groove segments 10 is connected to the adjacent second groove segment 9 smoothly without forming an inflection point.
The third groove segment 10 is inclined with respect to the tire circumferential direction at an inclination angle θ3 which is larger than the inclination angle θ2 of the second groove segment 9.
Thus, during cornering when the tread portion is subjected to large side force, the third groove segments 10 can effectively discharge the water existing in the axial grooves. Preferably, the inclination angle θ3 is gradually increased toward the tread edge Te so that the third groove segment 10 has an arc-shaped configuration. Thereby, the above-mentioned function is more effectively derived.

The groove width W3 of the third groove segment 10 is preferably set in a range of from 3 % to 25 % of the tread width TW.

The depth of the axial groove 3 may be arbitrarily defined. But, in order to avoid decrease in the wet grip performance while securing the rigidity of the land portion of the tread portion 2, the depth is preferably set in a range of from 3 to 7 mm.

In this embodiment, each of the connecting grooves 4 connects between
one of the bent positions 11 of one of the axial grooves 3 and one of the third groove segments 10 of the axial groove 3 which is adjacent to the concerned bent position 11 in the intended tire rotational direction N.
Thereby, the problem with the bent positions 11 at which the resistance to water flow becomes high in ordinary circumstances can be resolved, and the wet grip performance can be improved.

The width W4 of the connecting groove 4 is preferably set in a range of from 1 to 10 mm.
If the width W4 is less than 1 mm, it is difficult to improve the drainage performance. If the width W4 is more than 10 mm, since the volume of the land portions on both sides of the connecting grooves 4 decreases, there is a possibility that the wear resistance is deteriorated.
For the similar reasons, the depth of the connecting groove 4 is preferably set in a range of from 80 % to 100 % of the depth of the axial grooves 3.

The circumferential grooves 5 in this example extend straight on the tire equator. As a result, a groove extending straight continuously in the tire circumferential direction is formed by the circumferential grooves 5 together with the axial grooves 3. Therefore, water existing in the vicinity of the tire equator C can be effectively discharged toward the opposite direction to the intended tire rotational direction N.

The width W5 of the circumferential grooves 5 is preferably set in a range of from 4 % to 10 % of the tread width TW in order to improve the drainage, while securing the rigidity of the land portions near the tire equator C where large ground pressure occurs during straight running.
For the similar reasons, the depth of the circumferential grooves 5 is preferably set in a range of from 80 % to 120 % of the depth of the axial grooves 3.

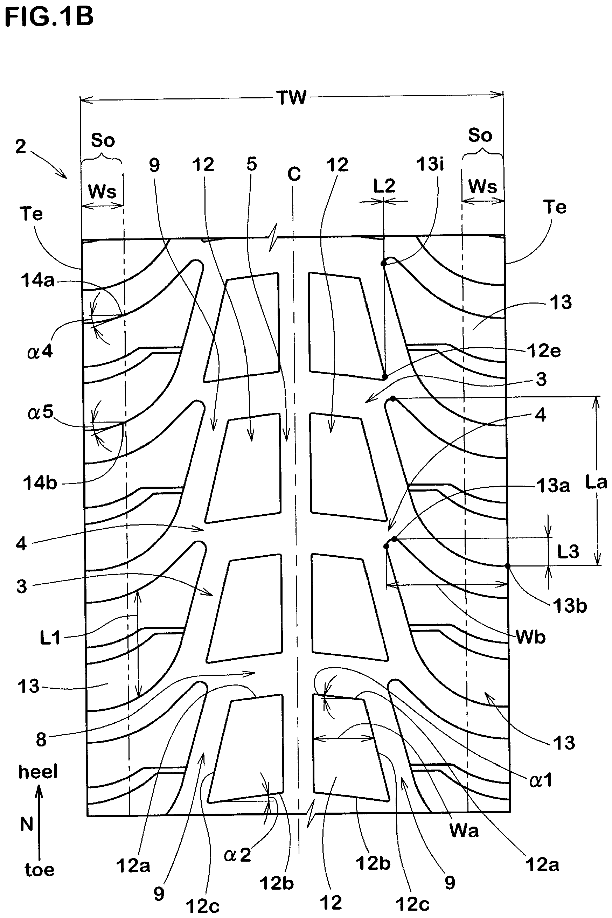

As shown in Fig. 1B, the tread portion 2 is provided with
plural pairs of right and left crown blocks 12 defined by the axial grooves 3, the right and left connecting grooves 4, and the circumferential grooves 5, and
plural pairs of right and left shoulder blocks 13 defined by the axial grooves 3, the right and left connecting grooves 4, and the tread edges Te.

Each of the crown blocks 12 has a trapezoidal configuration, and the axial width Wa thereof is gradually decreased toward the intended tire rotational direction N. Thus, the crown block 12 has a heel-side edge 12a having a smaller axial length and a toe-side edge 12b having a larger axial length.
Further, the crown block 12 has an oblique edge 12c extending from the axially outer end of the heel-side edge 12a to the axially outer end of the toe-side edge 12b while inclining to the tread edge Te.

The heel-side edge 12a abuts on one of the first groove segments 8. The toe-side edge 12b abuts on another first groove segment 8. The oblique edge 12c abuts on one of the second groove segments 9.

The heel-side edge 12a is substantially parallel with the toe-side edge 12b.

Preferably, the difference |α1-α2| between the angle α1 of the heel-side edge 12a with respect to the tire axial direction and the angle α2 of the toe-side edge 12b with respect to the tire axial direction is at most 5 degrees in order to axially even the circumferential rigidity of the crown block 12 and thereby improve the wear resistance.

In order to increase the axial rigidity of the crown block 12 and thereby improve the wet grip performance, it is preferable that the angle α1 of the heel-side edge 7a and the angle α2 of the toe-side edge 7b are not more than 45 degrees, more preferably not more than 30 degrees, still more preferably not more than 10 degrees.

Each shoulder block 13 has such a configuration that its circumferential length L1 is gradually increased toward the axially outside in order that the rigidity of the shoulder block 13 is gradually increased toward its tread edge side where the ground pressure becomes high during cornering, and thereby the wear resistance and the uneven wear resistance are improved.

On each side of the tire equator, the axially inner ends 13i of the shoulder blocks 13 are positioned axially inside the axially outer ends 12e of the crown blocks 12.
In other words, in the tire axial direction, the shoulder blocks 13 overlap with the crown blocks 12.
Therefore, in the tire axial direction, the rigidity of the tread portion 2 is evened, and the uneven wear resistance and the wear resistance can be improved.

Preferably, the axial distance L2 between the inner ends 13i of the shoulder blocks 13 and the outer ends 12e of the crown blocks 12, namely, their overlap in the tire axial direction is set in a range of from 1 to 4 mm. If the overlap is excessively large, the groove width W2 of the second groove segment 9 of the axial groove 3 is decreased, and there is a possibility that the wet grip performance is deteriorated.

The maximum axial width Wb of the shoulder block 13 is preferably set in a range of from 25 % to 35 % of the tread width TW in order to prevent uneven wear of the crown blocks 12 and shoulder blocks 13.

The heel-side end 13a of each shoulder block 13 is positioned on the heel-side of the toe-side end 13b of one of the shoulder blocks 13 which is adjacent to the above-mentioned shoulder block 13 on the heel-side thereof.
Thereby, in the shoulder blocks 13 which are subjected to large side force during cornering, their axial rigidity is evened in the tire circumferential direction, and the wear resistance is improved.

Preferably, the circumferential distance L3 between the heel-side end 13a and the toe-side end 13b, namely, the overlap in the tire circumferential direction between the adjacent shoulder blocks 13 is set in a range of from 10 % to 25 % of the maximum circumferential length La of the shoulder block 13. If the distance L3 or overlap L3 is more than 25 %, the width of the axial groove 3 is decreased in the second groove segment 9 and third groove segment 10, and there is a possibility that the wet grip performance is deteriorated.

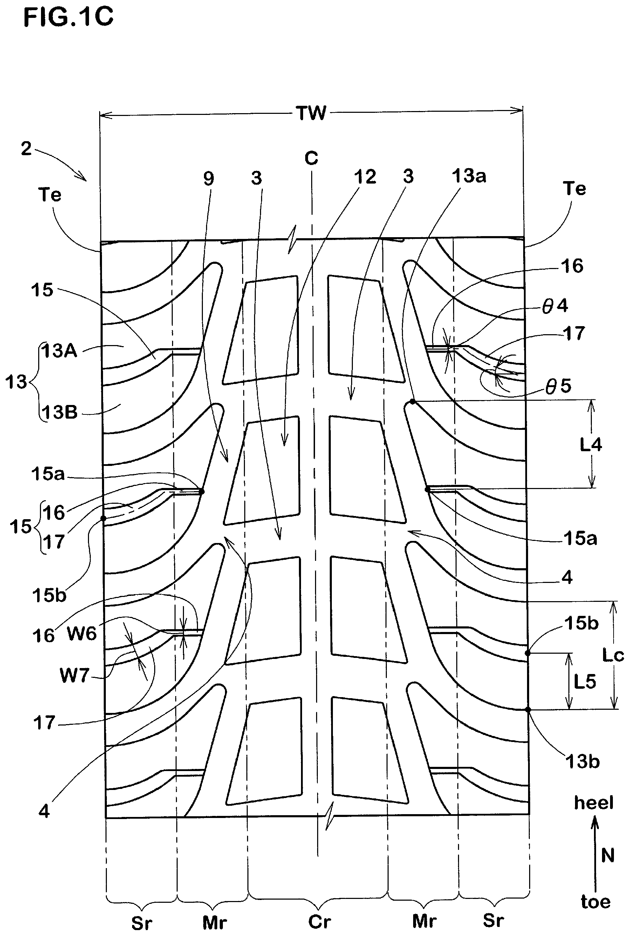

As shown in Fig. 1C, the shoulder blocks 13 are each provided with a shoulder axial groove 15.

The shoulder axial groove 15 has an axially inner end 15a connected to the adjacent second groove segment 9, and an axially outer end 15b opened at the adjacent tread edge Te in order to lead water existing between the shoulder block 13 and the road surface to the tread edge Te and thereby improve the wet grip performance.

The shoulder axial groove 15 comprises
an axially inside segment 16 having the above-mentioned inner end 15a and having a groove width W6, and
an axially outside segment 17 having a groove width w7 more than the groove width W6.

The angle θ4 of the inside segment 16 with respect to the tire axial direction is not more than 45 degrees, preferably not more than 20 degrees, more preferably not more than 5 degrees in order to secure axial rigidity of an axially inside part of the shoulder block 13 and thereby improve the wet grip performance during cornering.
From this standpoint, the inside segment 16 in this example extends substantially parallel with the tire axial direction.

In order to improve the drainage while securing the rigidity of the axially inside part of the shoulder block 13, the groove width W6 of the inside segment 16 is preferably set in a range of from 1.0 to 3.0 mm, and
the groove depth of the inside segment 16 is preferably set in a range of from 45 % to 70 % of the depth of the axial groove 3.

The outside segment 17 extends axially outwardly while inclining to the opposite direction to the intended tire rotational direction N.
In this example, the outside segment 17 extends substantially parallel with the third groove segments 10.
Thereby, the circumferential rigidity of the shoulder block 13 between the outside segment 17 and the third groove segment 10 is evened in the tire axial direction, and the wear resistance and the wet grip performance can be improved in a well balanced manner.

It is preferable that the difference |θ3-θ5| between the angle θ5 of the outside segment 17 and the angle θ3 of the third groove segment 10 with respect to the tire axial direction is limited to at most 10 degrees, more preferably at most 5 degrees at any measuring position in the tire axial direction.

The groove width W7 of the outside segment 17 is preferably set in a range of from 2 % to 15 % of the maximum circumferential length La of the shoulder block 13 in order to improve the wear resistance and the wet grip performance in a well balanced manner.

It is preferable that the groove depth of the outside segment 17 is more than the groove depth of the inside segment 16 in order to effectively lead the water existing in the shoulder axial groove 15 toward the tread edge Te. Preferably, the groove depth of the outside segment 17 is set in a range of from 80 % to 100 % of the depth of the axial groove 3 in order to improve the wet grip performance and the wear resistance in a well balanced manner.

Each of the shoulder blocks 13 is divided by the shoulder axial groove 15 into a heel-side block part 13A on the heel-side of the shoulder axial groove 15, and a toe-side block part 13B on the heel-side of the shoulder axial groove 15.

Preferably, the area of the ground contacting face of the heel-side block part 13A is set in a range of not less than 90 %, more preferably not less than 95 %, but not more than 110 %, more preferably not more than 105 % of the area of the ground contacting face of the toe-side block part 13B. If less than 90 % or more than 110 %, the difference in the rigidity between the heel-side block part 13A and the toe-side block part 13B is increased, and uneven wear is liable to occur. In order to effectively derive the above-mentioned function, the circumferential distance L4 between the inner end 15a of the shoulder axial groove 15 and the heel-side end 13a of the shoulder block 13 is preferably set in a range of from 40 % to 60 % of the maximum circumferential length La. The circumferential distance L5 between the axially outer end 15b of the shoulder axial groove 15 and the toe-side end 13b of the shoulder block 13 is preferably set in a range of from 40 % to 60 % of the circumferential length Lc of the shoulder block 13 measured at the tread edge Te.
In the measurements of the circumferential distances L4 and L5, the axially inner end 15a and axially outer end 15b of the shoulder axial groove 15 mean their widthwise center of the shoulder axial groove 15.

As shown in Fig. 1B, each shoulder block 13 has a heel-side block edge 14a and a toe-side block edge 14b. In a tread edge zone So defined as extending axially inwardly from each of the tread edges Te by an axial distance Ws of 10 % of the tread width TW (namely, the zone So has the axial width Ws), it is preferable that the difference |α4-α5| between the angle α4 of the heel-side block edge 14a and the angle α5 of the toe-side block edge 14b with respect to the tire axial direction is limited to at most 5 degrees at any measuring position in the tire axial direction.
Thereby, the circumferential rigidity of the tread edge zone so, which is subjected to largest side force, is secured over its entire axial width, and the wear resistance and the wet grip performance can be improved in a well balanced manner.

In order to effectively derive the above-mentioned function, the angle α4 of the heel-side block edge 14a and the angle α5 of the toe-side block edge 14b are preferably set in a range of not more than 10 degrees, more preferably not more than 5 degrees.

It is preferable that the tread portion 2 constructed as described above satisfies the following relationships:
the land ratio of the center region Cr is smaller than the land ratio of the middle region Mr, and
the land ratio of the middle region Mr is smaller than the land ratio of the shoulder region sr,
   wherein
the center region Cr is defined as being centered on the tire equator C and having a width of 34 % of the tread width TW,
the shoulder region Sr is defined as extending axially inwardly from each tread edge Te and having a width of 16 % of the tread width TW,
the middle region Mr is defined between the center region Cr and each shoulder region Sr, and
the land ratio of a region is the ratio (Mb/Ma) of the ground contacting area Mb of the concerned region to the overall area Ma of the concerned region.

By satisfying the above-mentioned relationships, the rigidity of the shoulder regions sr, which are subjected to large side force during cornering, can be increased to higher than those of the center region Cr and the middle regions Mr. Thereby, the wear resistance can be improved in a well balanced manner.
The land ratio of the center region Cr is preferably not less than 30 %, more preferably not less than 40 %, but preferably not more than 60 %, most preferably 50 %.
The land ratio of the middle region Mr is preferably not less than 50 %, more preferably not less than 60 %, but preferably not more than 80 %, more preferably not more than 70 %. The land ratio of the shoulder region Sr is preferably not less than 50 %, more preferably not less than 60 %, but preferably not more than 80 %, more preferably not more than 70 %.

### Comparison Tests

Based on the tread pattern shown in Fig. 1, pneumatic tires for four-wheeled racing kart were manufactured.

specifications of the pneumatic tires (embodiment tires E1-E19 and comparative example tires R1 and R2) are listed in Table 1.

Common specifications are as follows:
tread width TW: 130 mm
axial grooves' depth: 5.0 mm
connecting grooves' depth: 5.0 mm
circumferential grooves' depth: 5.0 mm
outside segments' depth: 5.0 mm
inside segments' depth: 3.0 mm
heel-side edge angle *α*4 ≥ toe-side edge angle *α*5
third groove segment angle *θ*3 ≥ outside segment angle *θ*5

### < Wet grip performance >

The test tires were mounted on the four wheels of a racing kart using a 100cc engine. During running on a wet asphalt road surface of a tire test course covered with 5 mm deep water, wet grip performance of the test tires was evaluated into five ranks by the test driver.

The results are indicated in Table 1, wherein the higher the rank number, the better the wet grip performance.

```
       < front wheels >
         tire size: 10x4.50-5
         wheel rim size: 4.5
         tire pressure: 100 kPa
       < rear wheels >
         tire size: 11x6.50-5
         wheel rim size: 6.5
         tire pressure: 100 kPa
```

### < Time trial >

In a 734 meter circuit course with asphalt road surface covered with 5 mm deep water, a time trial was conducted, using the above-mentioned racing kart.
In the time trial, the time required for running for seven laps was measured, and the time was classified as follows based on the fastest time in the test tires.
1: fastest time+2.5 sec. ≤ Time
2: fastest time+1.5 sec. ≤ Time < fastest time+2.5 sec.
3: fastest time+0.5 sec. ≤ Time < fastest time+1.5 sec.
4: fastest time+0.1 sec. ≤ Time < fastest time+0.5 sec.
5: Time < fastest time+0.1 sec.
The results are shown in Table 1.

### < Wear resistance >

After the above-mentioned time trial, the tread portion of the test tire was visually inspected for tread wear, and the tread wear was classified as follows.
1: serious wear was caused.
2: moderate degree of wear was caused
3: slight degree of wear was caused
4: the tread portion showed signs of wear
5: the tread portion showed no sign of wear
The results are shown in Table 1.

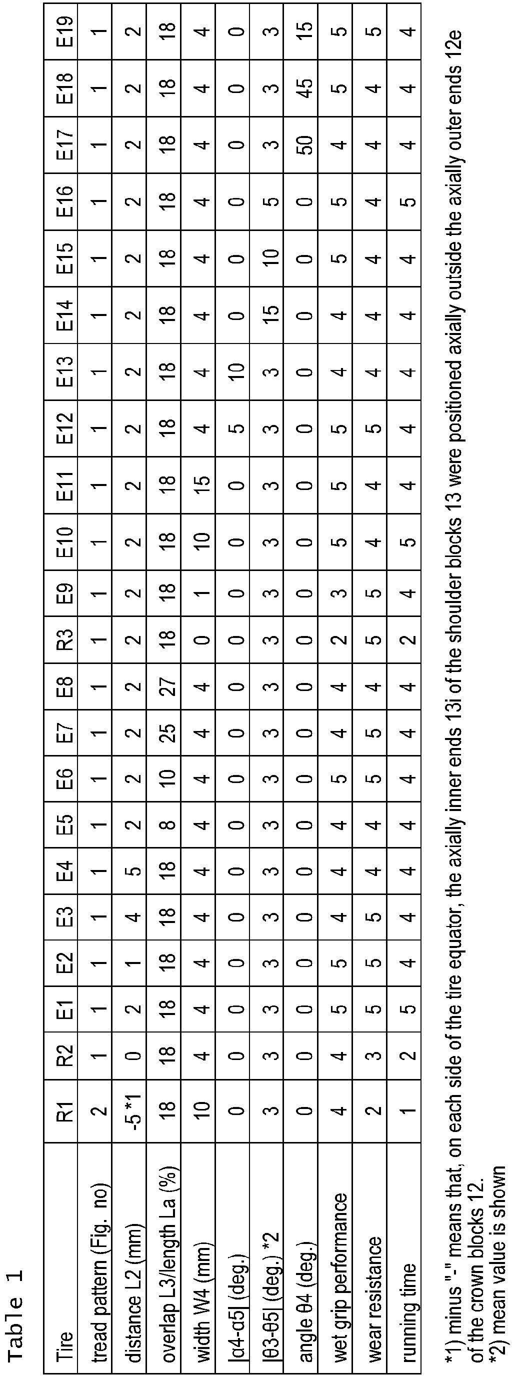

From the test results, it was confirmed that, in comparison with the comparative example tires, embodiment tires were improved in the wear resistance without sacrificing the wet grip performance.

### Reference Signs List

- 1: tire
- 2: tread portion
- 3: axial groove
- 4: connecting groove
- 12: crown block
- 12e: axially outer end of crown block
- 13: shoulder block
- 13i: axially inner end of shoulder block
- C: tire equator
- N: intended tire rotational direction

## Claims

1. A pneumatic tire (1) comprising a tread portion (2) provided with a unidirectional tread pattern having an intended tire rotational direction (N),
the tread portion (2) provided with:
a plurality of axial grooves (3) each extending between tread edges (Te) and curved convexly toward the intended tire rotational direction (N);
a pair of connecting grooves (4) disposed one on each side of the tire equator (C), and disposed between every two of the circumferentially adjacent axial grooves (3) so as to connect therebetween;
a circumferential groove (5) disposed along the tire equator (c), and disposed between every two of the circumferentially adjacent axial grooves (3) so as to connect therebetween;
a pair of crown blocks (12) formed between every two of the circumferentially adjacent axial grooves (3), and divided by the two connecting grooves (4) and one circumferential groove (5), wherein each crown block (12) has a substantially trapezoidal configuration, and an axial width (Wa) gradually decreasing toward the intended tire rotational direction (N); and
a pair of shoulder blocks (13) formed between every two of the circumferentially adjacent axial grooves (3), and disposed axially outside the respective crown blocks (12),
on each side of the tire equator (c), the axially outer ends (12e) of the crown blocks (12) are positioned axial outside the axially inner ends (13i) of the shoulder blocks (13),
wherein each of the axial grooves (3) comprises a first groove segment (8) extending across the tire equator and a pair of second groove segments (9) on both sides thereof in the tire axial direction, and each second groove segment (9) defines an axially outer oblique edge (12c) of one of the crown blocks (12),
each of the shoulder blocks (13) is provided with a shoulder axial groove (15) having an inner end connected to one of the second groove segments (9) and an outer end opened at the adjacent tread edge (Te),
**characterized in that**
the shoulder axial groove (15) comprises an inside segment (16) having said inner end and an outside segment (17) having a groove width (W7) more than a groove width (w6) of the inside segment (16), and
the outside segment (17) has an inclination angle (θ5) of not more than 45 degrees with respect to the tire axial direction.

2. The pneumatic tire (1) according to claim 1, wherein a heel-side end (13a) of each shoulder block (13) is positioned on the heel-side of a toe-side end (13b) of the shoulder block (13) adjacent to said shoulder block (13) on the heel-side thereof.

3. The pneumatic tire (1) according to any one of claims 1-2, wherein the connecting grooves (4) have a groove width (W4) of 1 to 10 mm.

4. The pneumatic tire (1) according to claim 1, wherein the inside segment (16) has an inclination angle (θ4) of not more than 45 degrees with respect to the tire axial direction.

5. The pneumatic tire (1) according to any one of claims 1-4, wherein
in a tread edge zone (So) defined as extending axially inwardly from each of the tread edges (Te) by an axial distance of 10 % of a tread width,
the shoulder block (13) has a heel-side edge (14a) and a toe-side edge (14b), and a difference between the angle (α4) of the heel-side edge (14a) with respect to the tire axial direction and the angle (α5) of the toe-side edge (14b) with respect to the tire axial direction is at most 5 degrees.

6. The pneumatic tire (1) according to claim 5, wherein the first block edge has an angle of not more than 45 degrees with respect to the tire axial direction.

## Patentansprüche

1. Luftreifen (1), der einen Laufflächenabschnitt (2) umfasst, der mit einem unidirektionalen Laufflächenprofil mit einer vorgesehenen Reifendrehrichtung (N) versehen ist,
wobei der Laufflächenabschnitt (2) versehen ist mit:
einer Vielzahl von axialen Rillen (3), die sich jeweils zwischen Laufflächenkanten (Te) erstrecken und konvex in Richtung der vorgesehenen Reifendrehrichtung (N) gekrümmt sind;
einem Paar Verbindungsrillen (4), von denen jeweils eine auf jeder Seite des Reifenäquators (C) angeordnet ist und die zwischen jeweils zwei der in Umfangsrichtung benachbarten axialen Rillen (3) angeordnet sind, um eine Verbindung zwischen diesen herzustellen;
einer Umfangsrille (5), die entlang des Reifenäquators (C) angeordnet ist, und die zwischen jeweils zwei der in Umfangsrichtung benachbarten axialen Rillen (3) angeordnet ist, um eine Verbindung dazwischen herzustellen;
einem Paar Kronenblöcken (12), die zwischen jeweils zwei der in Umfangsrichtung benachbarten axialen Rillen (3) gebildet und durch die beiden Verbindungsrillen (4) und eine Umfangsrille (5) geteilt sind, wobei jeder Kronenblock (12) eine im Wesentlichen trapezförmige Konfiguration und eine axiale Breite (Wa) aufweist, die sich allmählich in Richtung der vorgesehenen Reifendrehrichtung (N) verringert; und
einem Paar Schulterblöcken (13), die zwischen jeweils zwei der in Umfangsrichtung benachbarten axialen Rillen (3) gebildet und axial außerhalb der jeweiligen Kronenblöcke (12) angeordnet sind,
auf jeder Seite des Reifenäquators (C) die axial äußeren Enden (12e) der Kronenblöcke (12) axial außerhalb der axial inneren Enden (13i) der Schulterblöcke (13) positioniert sind,
wobei eine jede der axialen Rillen (3) ein erstes Rillensegment (8), das sich über den Reifenäquator erstreckt, und ein Paar zweite Rillensegmente (9) auf beiden Seiten davon in der axialen Reifenrichtung umfasst, und jedes zweite Rillensegment (9) eine axial äußere schräge Kante (12c) von einem der Kronenblöcke (12) definiert,
ein jeder der Schulterblöcke (13) mit einer axialen Schulterrille (15) versehen ist, die ein inneres Ende aufweist, das mit einem der zweiten Rillensegmente (9) verbunden ist, und ein äußeres Ende, das an der benachbarten Laufflächenkante (Te) geöffnet ist,
**dadurch gekennzeichnet, dass**
die axiale Schulterrille (15) ein Innensegment (16) mit dem genannten inneren Ende und ein Außensegment (17) mit einer Rillenbreite (W7) aufweist, die größer ist als die Rillenbreite (W6) des Innensegments (16), und
das Außensegment (17) einen Neigungswinkel (θ5) von nicht mehr als 45 Grad in Bezug auf die axiale Reifenrichtung aufweist.

2. Luftreifen (1) nach Anspruch 1, wobei ein fersenseitiges Ende (13a) jedes Schulterblocks (13) auf der Fersenseite eines zehenseitigen Endes (13b) des Schulterblocks (13) benachbart zum Schulterblock (13) auf dessen Fersenseite positioniert ist.

3. Luftreifen (1) nach einem der Ansprüche 1-2, wobei die Verbindungsrillen (4) eine Rillenbreite (W4) von 1 bis 10 mm aufweisen.

4. Luftreifen (1) nach Anspruch 1, wobei das Innensegment (16) einen Neigungswinkel (θ4) von nicht mehr als 45 Grad in Bezug auf die axiale Reifenrichtung aufweist.

5. Luftreifen (1) nach einem der Ansprüche 1-4,
wobei in einer Laufflächenkantenzone (So), die so definiert ist, dass sie sich von jeder der Laufflächenkanten (Te) einen axialen Abstand von 10 % einer Laufflächenbreite axial nach innen erstreckt,
der Schulterblock (13) eine fersenseitige Kante (14a) und eine zehenseitige Kante (14b) aufweist, und eine Differenz zwischen dem Winkel (θ4) der fersenseitigen Kante (14a) in Bezug auf die axiale Reifenrichtung und dem Winkel (θ5) der zehenseitigen Kante (14b) in Bezug auf die axiale Reifenrichtung höchstens 5 Grad beträgt.

6. Luftreifen (1) nach Anspruch 5, wobei die erste Blockkante einen Winkel von nicht mehr als 45 Grad in Bezug auf die axiale Reifenrichtung aufweist.

## Revendications

1. Bandage pneumatique (1) comprenant une portion formant bande de roulement (2) dotée d'un motif de roulement unidirectionnel ayant une direction de rotation de pneumatique par conception (N),
la portion formant bande de roulement (2) étant dotée de :
une pluralité de rainures axiales (3) s'étendant chacune entre des bords de roulement (Te) et étant incurvées de manière convexe vers la direction de rotation de pneumatique par conception (N) ;
une paire de rainures de connexion (4) disposées sur chaque côté d'un équateur de pneumatique (C), et disposées entre deux rainures axiales circonférentiellement adjacentes (3), toutes les deux rainures, de manière à assurer la connexion entre celles-ci ;
une rainure circonférentielle (5) disposée le long de l'équateur de pneumatique (C), et disposée entre deux rainures axiales circonférentiellement adjacentes (3), toutes les deux rainures, de manière à assurer la connexion entre celles-ci ;
une paire de blocs de couronne (12) formés toutes les deux rainures axiales circonférentiellement adjacentes (3), et divisés par les deux rainures de connexion (4) et par une rainure circonférentielle (5), dans lequel chaque bloc de couronne (12) présente une configuration sensiblement trapézoïdale et une largeur axiale (Wa) diminuant graduellement vers la direction de rotation de pneumatique par conception (N) ; et
une paire de blocs d'épaulement (13) formés toutes les deux rainures axiales circonférentiellement adjacentes (3), et disposés axialement à l'extérieur des blocs de couronne respectifs (12),
sur chaque côté de l'équateur de pneumatique (C), les extrémités axialement extérieures (12e) des blocs de couronne (12) sont positionnées axialement à l'extérieur des extrémités axialement intérieures (13i) des blocs d'épaulement (13),
dans lequel chacune des rainures axiales (3) comprend un premier segment de rainure (8) s'étendant à travers l'équateur de pneumatique et une paire de deuxièmes segments de rainure (9) sur les deux côtés de celui-ci dans la direction axiale du pneumatique, et chaque deuxième segment de rainure (9) définit un bord oblique axialement extérieur (12c) d'un des blocs de couronne (12),
chacun des blocs d'épaulement (13) est doté d'une rainure axiale d'épaulement (15) ayant une extrémité intérieure reliée à un des deuxièmes segments de rainure (9) et une extrémité extérieure ouverte au niveau du bord de roulement adjacent (Te),
**caractérisé en ce que**
la rainure axiale d'épaulement (15) comprend un segment intérieur (16) ayant ladite extrémité intérieure et un segment extérieur (17) ayant une largeur de rainure (W7) supérieure à une largeur de rainure (W6) du segment intérieur (16), et
le segment extérieur (17) a un angle d'inclinaison (θ5) qui n'est pas supérieur à 45 degrés par rapport à la direction axiale du pneumatique.

2. Bandage pneumatique (1) selon la revendication 1, dans lequel une extrémité côté talon (13a) de chaque bloc d'épaulement (13) est positionnée sur le côté talon d'une extrémité côté pointe (13b) du bloc d'épaulement (13) adjacent audit bloc d'épaulement (13) sur le côté talon de celui-ci.

3. Bandage pneumatique (1) selon l'une quelconque des revendications 1 à 2, dans lequel les rainures de connexion (4) ont une largeur de rainure (W4) de 1 à 10 mm.

4. Bandage pneumatique (1) selon la revendication 1, dans lequel le segment intérieur (16) a un angle d'inclinaison (θ4) qui n'est pas supérieur à 45 degrés par rapport à la direction axiale du pneumatique.

5. Bandage pneumatique (1) selon l'une quelconque des revendications 1 à 4, dans lequel
dans une zone de bord de roulement (So) définie comme s'étendant axialement vers l'intérieur de chacun des bords de roulement (Te) sur une distance axiale de 10 % d'une largeur de roulement,
le bloc d'épaulement (13) a un bord côté talon (14a) et un bord côté pointe (14b), et une différence entre l'angle (α4) du bord côté talon (14a) par rapport à la direction axiale du pneumatique et l'angle (α5) du bord côté pointe (14b) par rapport à la direction axiale du pneumatique est au maximum 5 degrés.

6. Bandage pneumatique (1) selon la revendication 5, dans lequel le premier bord de bloc a un angle qui n'est pas supérieur à 45 degrés par rapport à la direction axiale du pneumatique.
